# EUROPEAN PATENT APPLICATION

(11) **EP 0 941 660 A1**
(43) Date of publication of application: **15.09.1999**
(21) Application number: 98301627.0
(22) Date of filing: 05.03.1998
(51) Int. Cl.: A01M 1/06

(54) **Insect-catcher**

(71) Applicant: Chen, Ramy, Hsi-Chih Chen, Taipei Hsien (TW)
(72) Inventor: Chen, Ramy, Hsi-Chih Chen, Taipei Hsien (TW)
(74) Representative: Barlow, Roy James

(57) **Abstract**

An insect-catcher is used to catch insects, and includes a hollow body (10) having a first open end (101), an insect collecting housing (13) having a second open end (132) and an open connecting end (131) connected to the first open end (101) of the hollow body (10), a sucking/blowing unit provided inside the hollow body (10) for sucking or blowing the insects into or out of the hollow body (10), and a screen (130) provided in the insect collecting housing (13) adjacent to the open connecting end (131) and adapted to hold the insects in the insect collecting housing (13).

## Description

The present invention relates to an insect-catcher, more particularly to one having a sucking/blowing unit for sucking or blowing insects into or out of the insect-catcher.

Two approaches are commonly used to eradicate insects: one is by striking directly at the insects, and the other is by spraying pesticides to poison the insects. As to the former, it is difficult to pursue flying insects and we often try in vain to catch the insects to be killed. As to the latter, although the use of pesticides facilitates the killing of annoying insects, chemicals contained in the pesticides are highly insolvable and will accumulate gradually to result in pollution of the environment. Besides, the overuse of pesticides may increase the resistance of the insects thereto.

The object of this invention is to provide an insect-catcher which is portable and easy to handle, and which is not harmful to the environment.

Accordingly, an insect-catcher of this invention includes a hollow body having a first open end, an insect collecting housing having a second open end and an open connecting end connected to the first open end of the hollow body, a sucking/blowing unit provided inside the hollow body for sucking or blowing insects into or out of the hollow body, and a screen provided in the insect collecting housing adjacent to the open connecting end for holding the insects in the insect collecting housing.

The features and advantages of the present invention will be described in more detail with reference to the accompanying drawings, which illustrate the preferred embodiments of this invention, wherein:
Fig. 1 shows a preferred embodiment of an insect-catcher of this invention; and
Fig. 2 shows another preferred embodiment of an insect-catcher of this invention.

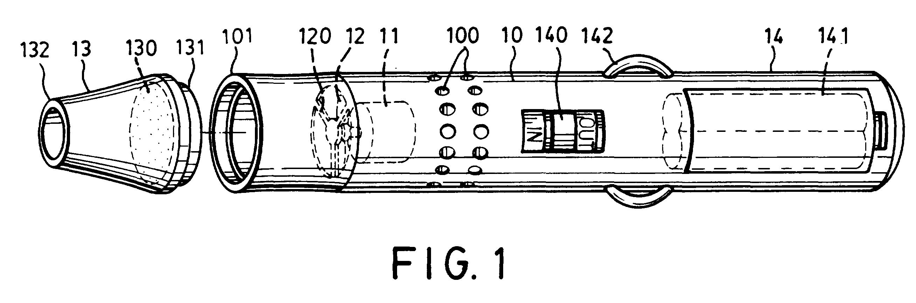

Referring to Figure 1, a preferred embodiment of an insect-catcher according to this invention is shown to include a hollow body 10 having a tubular wall and a first open end 101, a detachable insect collecting housing 13 having a second open end 132 and an open connecting end 131 connected to the first open end 101 of the hollow body 10, a sucking/blowing unit provided inside the hollow body 10 for sucking or blowing insects into or out of the hollow body 10, and a screen 130 provided in the insect collecting housing 13 adjacent to the connecting end 131.

The sucking/blowing unit includes a fan 12 disposed adjacent to the first open end 101 of the hollow body 10, a motor 11 for driving the fan 12, a bi-directional switch 140 disposed on the tubular wall of the hollow body 10 and operable so as to control the direction of rotation of the motor 11 in order to actuate the fan 12 to perform a sucking or blowing operation, and a power supply 14 disposed adjacent to the opposing end of the hollow body 10. The power supply 14 and the bi-directional switch 140 are electrically connected.

When catching an insect, the second open end 132 of the insect collecting housing 13 is aimed at the insect to be caught, and the bi-directional switch 14 is turned to its "IN" position. Then, the fan 14 is driven by the motor 11, which is powered by the power supply 14, and a sucking force is generated. Insects around the second open end 132 of the insect collecting housing 13 will be sucked into the insect collecting housing 13 and held on the screen 130 provided therein.

Thereafter, it is possible to cover the second open end 132 of the insect collecting housing 13 to trap the insects for dealing with the same at a later time, or to move the insect-catcher to an appropriate place and then release the insects by actuating the fan 13 to perform the blowing operation. Blowing air is generated when the bi-directional switch 140 is turned to its "OUT" position, and the motor 11, and hence the fan 12, rotate in a reverse direction.

Since the screen 130 is provided between the first open end 101 of the hollow body 10 and the second open end 132 of the insect collecting housing 13, and may somewhat hinder the sucking/blowing air flow due to the relatively small mesh of the screen 130, a plurality of vent holes 100 are provided on the tubular wall of the hollow body 10 to facilitate air flow in and out of the hollow body 10, thus enhancing the sucking/blowing performance of the fan 13.

The insect collecting housing 13 can be detached from the hollow body 10 for cleaning. A protective shield 120 is provided between the fan 13 and the first open end 101 of the hollow body 10 for safety.

In this embodiment, the power supply 14 includes a charger 142 and a rechargeable battery set 141 which is electrically connected to the charger 142 for recharging the same in a known manner. The charger 142 may be a common charging device or a cigarette lighter socket found in most cars. The insect-catcher with the above-mentioned structure is portable, and can be used while mountain-climbing, camping and so forth.

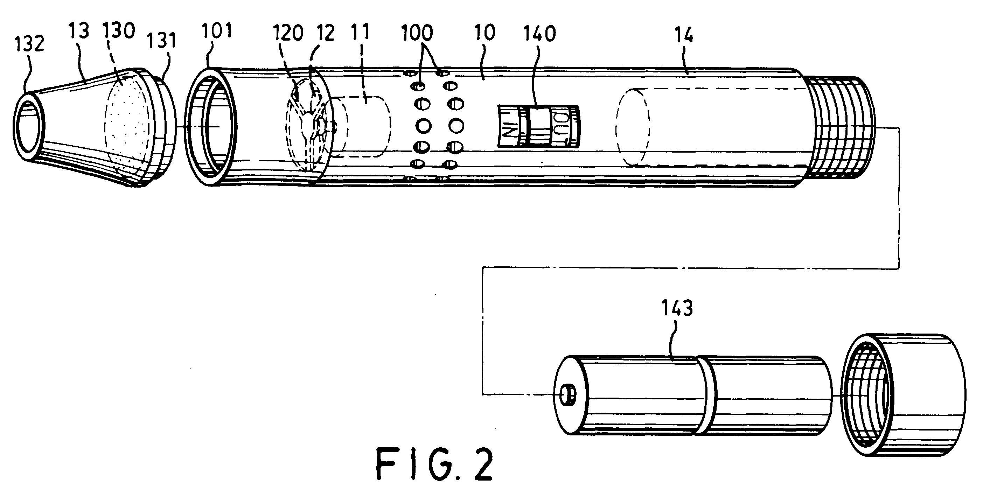

Referring to Figure 2, another embodiment of an insect-catcher according to this invention is shown. The only differences between the embodiment of Fig. 1 and the present embodiment reside in that the rechargeable battery set 141 is replaced by non-rechargeable batteries 143 and that the charger 142 is eliminated. The insect-catcher of this embodiment, which has a simpler structure, also has the advantages of the previous embodiment.

## Claims

1. An insect-catcher for catching insects, characterized by:
a hollow body (10) having a first open end (101);
an insect collecting housing (13) having a second open end (132) and an open connecting end (131) which is opposite to the second open end (132) and which is connected to the first open end (101) of the hollow body (10);
a sucking/blowing unit provided inside the hollow body (10) for sucking or blowing the insects into or out of the hollow body (10), the sucking/blowing unit including a fan (12), a motor (11) for driving the fan (12), a bi-directional switch (140) for controlling direction of rotation of the motor (11) so as to actuate the fan (12) to perform a sucking or blowing operation, and a power supply (14); and
a screen (130) provided in the insect collecting housing (13) adjacent to the open connecting end (131) and adapted to hold the insects in the insect collecting housing (13) when the fan (12) performs the sucking operation.

2. The insect-catcher as claimed in Claim 1, characterized in that the hollow body (10) includes an elongated tubular wall formed with a plurality of vent holes (100).

3. The insect-catcher as claimed in claim 1 or 2, characterized in that the power supply (14) comprises a rechargeable battery set (141).

4. The insect-catcher as claimed in claim 3, characterized in that the power supply (14) further comprises a charger (142) for recharging the rechargeable battery set (141).

5. The insect-catcher as claimed in any preceding claim, characterized in that the insect collecting housing (13) is detachable from the hollow body (10).

6. The insect-catcher as claimed in any preceding claim, further characterized by a protective shield (120) disposed inside the hollow body (10) and located between the fan (12) and the first open end (101) of the hollow body (10).
